# EUROPEAN PATENT APPLICATION

(11) **EP 4 190 155 A1**
(43) Date of publication of application: **07.06.2023**
(21) Application number: 21212194.1
(22) Date of filing: 03.12.2021
(51) Int. Cl.: A01N 65/42, A01N 25/00, A01N 25/34, A01P 21/00

(54) **PROCESS TO OBTAIN EXTRACELLULAR-LIKE NANOPARTICLES FROM PLANTS AND USES THEREOF**

(71) Applicant: Hansabiomed Life Sciences Oü, 12618 Tallinn (EE)
(72) Inventor: VEIMAN, Kadi-Liis, 12618 Tallinn (EE); SOOVÄLI, Pille, 12618 Tallinn (EE); GUAZZI, Paolo, 12618 Tallinn (EE); TOOTS, Mart, 12618 Tallinn (EE)
(74) Representative: Bianchetti & Minoja with Trevisan & Cuonzo IPS SRL

(57) **Abstract**

The present invention relates to process to obtain a composition enriched in extracellular-like nanoparticles (ELNs) from a plant or part thereof. It also relates to the use of ELNS obtained from garlic to improve plant crop yields in agriculture and to method of using such ELNs in plant agriculture.

## Description

The present invention relates to process to obtain a composition enriched in extracellular-like nanoparticles (ELNs) from a plant or parts thereof. It also relates to the use of ELNS obtained from garlic to improve plant crop yields in agriculture and to a method of using such ELNs in plant agriculture.

### BACKGROUND TO THE INVENTION

Growing population and increasingly stringent measures reversing climate change require ecologically friendly, sustainable, and innovative solutions for efficient plant production. Moreover, changing climate may lead to increase in spreading of plant pathogens.

Extracellular vesicles (EVs) are single-membrane nanoparticles that are released from cells. EVs play a crucial role in cell-cell communication as they shuttle bioactive cargo such as proteins and nucleic acids. Molecular composition of EVs is dependent on their origin, i.e. which type of cells they originate from [1]. EVs are a diverse group of nanoparticles ranging from endosome-derived exosomes (diameter 30 - 150nm), large microvesicles (diameter 150 - 1000nm) which are shed from the plasma membrane to apoptotic bodies (diameter >1000 nm) [2,3].

While EVs in humans were first described in almost 40 years ago ([4,5]), the presence of EV-like nanoparticles (ELNs) in plants was suggested firstly in 1967 [6]. However, modern ELN research began in 2012 when proteins without the signal peptide sequence were identified outside of the plant cell plasma membrane, and it was thought that the ELNs are responsible of the secretion [7,8].

Plants use RNAi to defend themselves against pathogen attacks by silencing pathogen's critical genes. Often ELNs act as carriers of these small RNAs. One option to utilize this phenomenon to increase resistance of economically important crops is to generate genetically modified (GM) plants by inserting small RNA genes into their genome (Host-Induced Gene Silencing,

HIGS), which is, however, time-consuming and raises ethical and social concerns [9,10]. Promising alternative to HIGS is to spray the plants with small RNA molecules (Spray-Induced Gene Silencing, SIGS). This approach seems to be effective in preventing several viral and fungal infections [11-14]. Still, SIGS has only been tested in a laboratory setting, and synthesis of RNA in quantities needed to spray hectares of land is challenging with the current technologies.

### PRIOR ART

Tangential flow filtration (TFF) method is known to be applicable for EV isolation [15,16], however it has not been validated for ELNs.

While we know much less about ELNs than we do about EVs secreted by human cells, several studies have suggested that ELNs play crucial role in the modulation of plant immune system. Specifically, it seems that upon pathogen invasion, ELNs are rapidly transported to the invasion site, and they are involved in host-pathogen communication [17-21]. Biochemical analyses of the ELNs cargo revealed that they contain proteins, metabolites and RNAs with regulatory functions that are likely used for silencing the pathogen's gene expression and regulate host's stress response [22-24].

To our knowledge, the potential use of garlic ELNs in improving crop yields is not suggested in the art.

### BRIEF DESCRIPTION OF THE DRAWINGS

Fig. 1 Characterisation of ELNs obtained from garlic, sea buckthorn and ginger **a-f:** transmission electron microscopy images. **g** the dynamic light scattering (DLS) **h:** diameter of nanoparticle tracking (NTA) **i:** TET8 expression
Fig. 2 Gene ontology (GO) enrichment/pathway analyses of ELNS obtained from garlic (a), sea buckthorn (b) and ginger (C)
Fig. 3 Effect of various treatments on wheat and barley crop field yields
Fig. 4 Effect of various treatments on wheat and barley crop quality

### DETAILED DESCRIPTION OF THE INVENTION

We have developed a rapid, cost-effective, and scalable process for isolation of ELNs from plants or parts thereof. This method is highly flexible allowing the isolation of ELNs from 10 ml up to 100 L material in one cycle.

Accordingly, in a first aspect of this invention, there is provided a process to obtain a composition enriched in ELNs from a plant or part thereof, such method comprising the steps of
a) obtaining an homogenate from such plant or parts thereof;
b) eliminating debris from the homogenate obtained in step a) though filtration and/or centrifugation;
c) subjecting the filtrate or supernatant obtained in step b) to at least two consecutive steps of tangential flow filtration (TFF);

Any part of plant may be used in such process. Non limiting examples of parts that can be used are the stems, leaves, roots, and fruits of the plant.

The homogenate of step a) may also be added with a buffering solution such as Dulbecco's Phosphate Buffered Saline (DPBS) in order to increase the stability of ELNs and allow efficient isolation with TFF.

In one embodiment, step b) is performed to eliminate debris having size is superior to a value selected from the list of 5000 nm, 4000 nm, 3000nm, 2000 nm and 1000 nm.

In one embodiment, the first TFF step is performed using a TFF filter having an average pore size range selected from the list of 150 to 250 nm, 150 to to 300, 150 to 350 nm ,150 to 400 nm, 150 to 450 nm and 150 to 500 nm.

In one embodiment, the first TFF step is performed using a TFF filter having an average pore size range below 500 nm.

In one embodiment, the first TFF step is performed using a TFF filter having an average pore size of about 200 nm.

In a specific embodiment, the first TFF step is performed using a TFF filter having an average pore size of 200 nm.

In another embodiment, the second TFF step is performed using a TFF filter having an average pore size range selected from the list of 30 to 70 nm, 30 to 100nm, 30 to 150 nm.

In another embodiment, the second TFF step is performed using a TFF filter having an average pore size range above 30 nm.

In one embodiment, the second TFF step is performed using a TFF filter having an average pore size of about 50 nm.

In a specific embodiment, the second TFF step is performed using a TFF filter having an average pore size of 50 nm.

In one embodiment, the plant of part thereof is selected from the list of garlic, ginger, and sea buckthorn.

In one embodiment, the part of a garlic plant is the bulb.

In one embodiment, the part of a ginger plant is the root.

In one embodiment, the part of the sea buckthorn plant is the fruit.

In one embodiment, the composition is enriched in ELNs having a size ranging from 30 to 500 nm.

In one embodiment, the ELNs are TET8-positive.

We have also surprisingly found that garlic ELNs are particularly useful in improving plant crop yield.

Accordingly, in a second aspect of this invention, there is provided a method to improve the crop yield of a plant, such method comprising treating its seeds with a composition comprising ELNs obtained from garlic or parts thereof prior to planting and/or treating the plant itself with such composition during growth.

In one embodiment according to this second aspect of the invention, such composition is obtained through the process according to the first aspect of this invention.

In one embodiment, the garlic ELNs have a size ranging from 30to 500 nm.

Also, in a third aspect of this invention, there is provided the use of ELNs obtained from garlic or parts thereof to improve plant crop yields.

In one embodiment according to this third aspect of the invention, such ELNs are obtained through the process according to the first aspect of this invention.

In a specific embodiment according to the second or third aspect of this invention, the ELNs are obtained from garlic bulbs.

In one embodiment according to the second or third aspect of this invention, the plant is a cereal.

In a more specific embodiment, the cereal is selected from the list of wheat and barley.

In one embodiment according to the second or third aspect of this invention, the ELNs obtained have a size ranging from 30 to 500 nm.

### EXAMPLES

The invention is now described by means of non-limiting examples.

### Materials & Methods

### Characterization of ELNs

Transmission electron microscopy analyses was performed exactly as described in [25]. Nanoparticle tracking analyses (NTA) was performed with the ZetaView PMX-120 NTA instrument (Particle Metrix) as described in [26]. Briefly, the instrument was calibrated prior to the measurement with 100nm polystyrene beads. Samples were diluted in 1X PBS so that the count would be 50 - 200 particles/frame and analyzed in all 11 positions of the cell. Camera sensitivity 85, shutter speed 100, high video quality (capturing 60 frames) at 30 frames/s (1 cycle), minimal area 10, maximal area 1000 and brightness 25. Human cell derived EVs were extracted from HCT116 cells with the same method as described for ELN isolation.

Dynamic light scattering (DLS) analyses was performed with the Zetasizer Nano ZS instrument (Malvern Panalytical) at ELN concentration 1 × 10⁹ determined by the NTA. TET8 expression was evaluated using the ELISA method - ELNs were bound to the high-binding plates (Biomat) and TET8 expression was detected using PHY1490S antibody (PhytoAB) at a dilution 1:500.

### Mass spectrometry (MS) analyses

At least 5 × 10¹⁰ particles were subjected for MS analyses.

Proteolysis - Sample proteins were precipitated with the methanol:chloroform:water precipitation. Precipitates were suspended in 7 M urea, 2 M thiourea, 100 mM ammonium bicarbonate (ABC) buffer. Disulfide reduction and cysteine alkylation with 5 mM dithiothreitol (DTT) and 20 mM chloroacetamide (CAA) were carried out for 60 min each at room temperature. Sample was pre-digested with 1:50 Lys-C (Wako) for 1 h, diluted five times with 100 mM ABC and further digested with 1:50 trypsin (Sigma Aldrich) overnight at room temperature. Peptides were desalted with in-house made C18 StageTips.

Peptide nano-ESI LC/MS/MS analysis - Peptides were injected to an Ultimate 3000 nano-RSLC system (Dionex) using a 300 µm ID × 5 mm C18 (5 µm, 300 Å particles) PepMap300 trap-column (Thermo Fisher Scientific). The sample was eluted at 200 nl/min from the trap to a 75 µm ID × 50 cm emitter-column (New Objective) packed with C18 material (3 µm, 300 Å particles, Dr Maisch). The separating gradient was 8-40% B for 120 min and 40-100% B for 5 min (A: 0.1% formic acid (FA), B: 80% ACN + 0.1% FA). Eluted peptides were sprayed to a Q Exactive Plus (Thermo Fisher Scientific) quadrupole-orbitrap mass spectrometer (MS) using nano-electrospray ionization at 2.4 kV. The MS was operated with a top-10 data-dependent acquisition strategy. Briefly, one 350-1400 m/z MS scan at a resolution setting of R=70 000 at 200 m/z was followed by ten higher-energy collisional dissociation fragmentation (normalized collision energy of 26) of the 10 most intense ions (z: +2 to +6) at R=17 500. MS and MS/MS ion target values were 3e6 and 5e4 with 50 ms injection time. Dynamic exclusion was limited to 40 s.

Data analysis - Mass spectrometric raw files were processed with the MaxQuant software package (version 1.6.15.0). Methionine oxidation and protein N-terminal acetylation were set as variable modifications, while cysteine carbamidomethylation was defined as a fixed modification. Search was performed against Allium sativum, Hippophae rhamnoides, Zingiber officinale, Bos taurus reference proteomes, using the tryptic digestion rule. Peptide-spectrum match and protein false discovery rate (FDR) were kept below 1% using a target-decoy approach. All other parameters were default.

Gene ontology (GO) pathway enrichment analyses was performed using the Gene Ontology Resource online tool (http://geneontology.org/) in the Panther classification system (v 14.0) [27]. MaxQuant [28] was used to analyze the MS data and only proteins that had intensity >1 × 10⁷ intensity (summed peptide peak areas) were included in the analyses.

### Evaluation of ELNs efficacy in the field experiments

Field experiments were carried out at the Estonian Crop Research Institute (ECRI) in Jõgeva during 2020 and 2021 spring-summer period. Field trials were set up as multifactorial experiment with four replicates in a randomized complete block design in 10 m² plots at the rate of 500 viable seeds per 1 m². Spring barley variety 'Anni' and spring wheat variety 'Manu' were used. The experimental field was ploughed in autumn and pre-crops were pea and barley. Trials were sown at the optimal time in the first week of May. Garlic, sea buckthorn and ginger ELNs at the concentration 5,9×10¹¹ particles/ml were used as seed treatment at dose lt⁻¹. ELNs were isolated as described in the materials and methods section above and stored in 1X DPBS at 4°C for up to three weeks prior to treatment. Untreated seeds were used as control. Treatment regime T1 (ELNs 50 ml ha⁻¹ and fungicide Input (160 g l⁻¹ prothioconazole, 300 g l⁻¹ spiroxamine) 1 l ha⁻¹) was carried out at the stem elongation stages (BBCH 34). Recommended fungicide Celest Trio 060 FS (25 g 1-1 fludioxonil, 25 g 1-1 difenoconazole, 10 g 1-1 tebuconazole) 1,5 lt-1was applied according to standard field practices. During the growing season, data was collected on plant leaf chlorophyll content using SPAD

For comparative experiments using commercial fertilisers, the treatments described in Table 1 below were used.

**Table 1**

| **Seed pretreatment** | **BBCH 13** | **BBCH 32** | **BBCH 45** | **BBCH 59** |
|---|---|---|---|---|
| Control | | | | |
| MPXA 48 g/t | MPXA 12 g/ha | | Revytrex 0.75 1/ha | |
| **Celest Trio 060 FS 1.5 l/t** | | | Revytrex 0.75 1/ha | |
| Bactolive Seed 100 g/t | | | NanoSi 100 g+Revytrex 0.75 1/ha | |
| **Celest Trio 1.5 l+Bactolive Seed 100 g/t** | | | NanoSi 100 g+Revytrex 0.75 1/ha | |
| Humix 1 1/t | | | Revytrex 0.75 1/ha | |
| **Bioorg EMO-N 100 ml/t+Bioorg VH 7 l/t** | | EMO-N 100 ml/ha+VH 4 1/ha | EMO-P 100 ml+VH 4 1 + Revytrex 0.75 1/ha | EMO-Safe 100 ml+VH 4 1/ha |
| Albit 100 ml/t | | Albit 60 ml + Prolis 2 g/ha | Albit 40 ml + Revytrex 0.75 1/ha | Albit 40 ml + Prolis 2 g/ha |
| **Celest Trio 1.5 l +Bactolive Seed 100 g/t** | | Albit 60 ml + Prolis 2 g/ha | Revytrex 0.75 1/ha | Albit 40 ml + Prolis 2 g/ha |
| Celest Trio 1,5 1+Albit 100 ml/t | | Albit 60 ml + Prolis 2 g/ha | Albit 40 ml + Revytrex 0.75 1/ha | Albit 40 ml + Prolis 2 g/ha |
| Viscofol 1l/t | | Viscofol 1 l/ha | Revytrex 0.75 1/ha | |
| NanoSi 1 l/t | | Humafol 2 1+NanoSi 100 g/ha | NanoSi 100 g + Revytrex 0.75 1/ha | |

Trials were harvested with a plot combine harvester in August at fully rape stage (BBCH 89). Qualitative and quantitative analysis of the yield parameters were conducted on dried and cleaned seeds and expressed on the basis of 14% moisture content. Grain yield (kg ha⁻¹) and grain quality characteristics, such as thousand kernel weight (g), were measured by ISTA method. Volume weight (g hl⁻¹) was measured by an automatic grain analyser InfratecTM 1241 (Foss, Cheshire, UK), protein content (%) and starch content (%) by near-infrared method using a XDS Rapid Content Analyser (Foss, Cheshire, UK).

### Example 1: Process according to the invention and characterization of the composition therefrom

Garlic bulbs (Estonian origin), sea buckthorn fruits (Estonian origin) or ginger roots (unknown origin) were mechanically mashed using a juice extractor centrifuge, and meshed plants were incubated in 1X DPBS for at least 1 hour at 4°C. Samples were filtered through glass filter to remove large debris and centrifuged at 500 g for 5 minutes at 4°C to clear the solution. Large particles were removed by centrifugation at 10 K G for 30 minutes at 4°C, and supernatant was collected and then subjected to a first TFF filtration using a TFF filter having an average pore size of 200 nm, and to a second TFF filtration using a TFF filter having an average pore size of 50 nm.

ELNs isolated with this method were then characterized with several methods routinely used and recommended by The International Society for Extracellular Vesicles (ISEV) - Minimal Information for Studies of Extracellular Vesicles (MISEV; [29]).

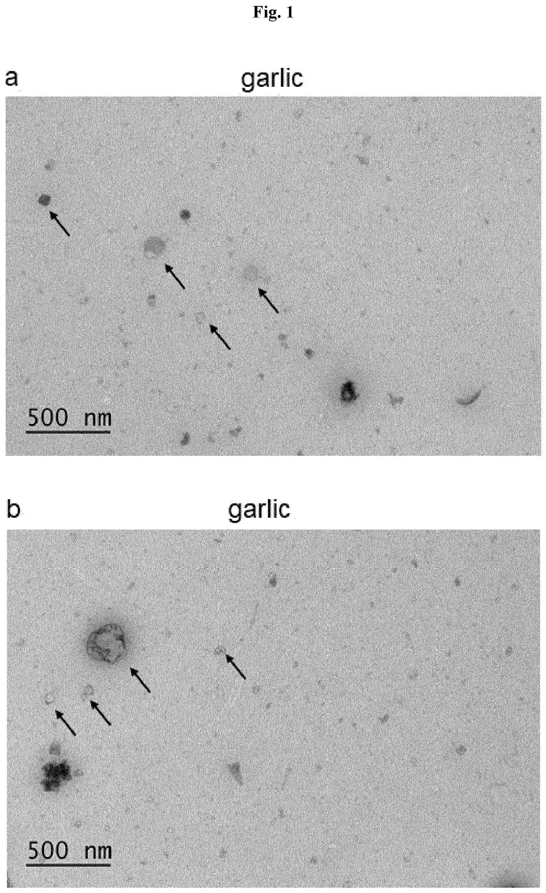

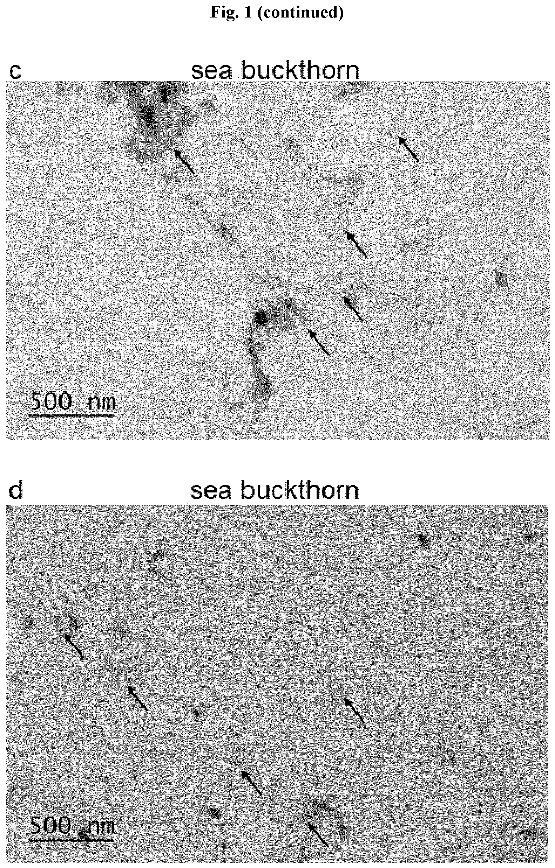

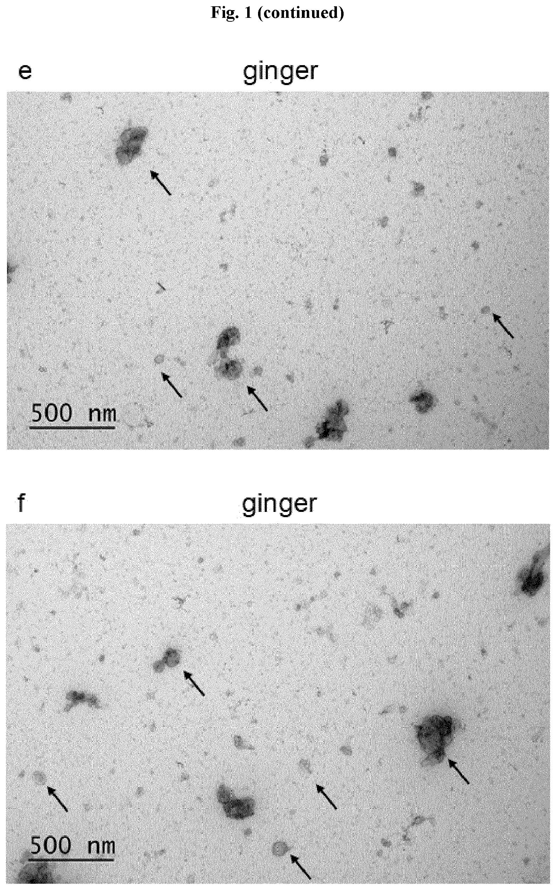

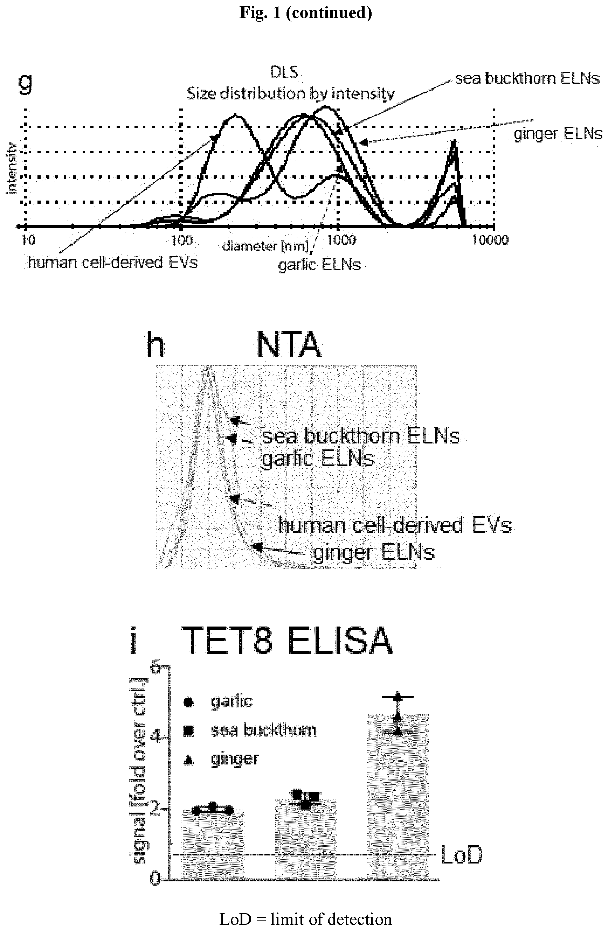

Firstly, we used transmission electron microscopy (TEM) method to visualize the nanoparticles present in the samples. Results in Fig. 1a-f suggest that ELNs purified with our 2-step TFF filtration method are almost identical to previously published data [30,31], and similar to EVs of human origin [32]. Two representative images of every sample are shown. Next, dynamic light scattering (DLS), and nanoparticle tracking (NTA) methods were used to determine the size of ELNs (Fig. 1g and 1h). While DLS suggested that ELNs are somewhat larger compared to the human cell derived EVs, NTA analyses showed no difference between them. This phenomenon can somewhat be explained by the fact that in case of DLS, the diameter measurements are shifted towards larger particles because its more sensitive to the presence of them [33,34]. The TEM seems to confirm the size distribution observed with NTA, showing mostly particles of small diameter (≈ 100 nm). The ELNs isolated are, on average, 100 - 500 nm in diameter and there is heterogeneity in the samples. The latter is expected since we did not aim for isolation of specific subpopulation of ELNs, but rather focused on isolation of particles sized between 50 - 400 nm. ELNs are known to be enriched in TET8 [17], a functional homolog of mammalian CD63 (a common marker for mammalian EVs [35]), and is therefore a suitable marker for validation. TET8 expression is detected in ELNs from all three sources (Figure 1i).

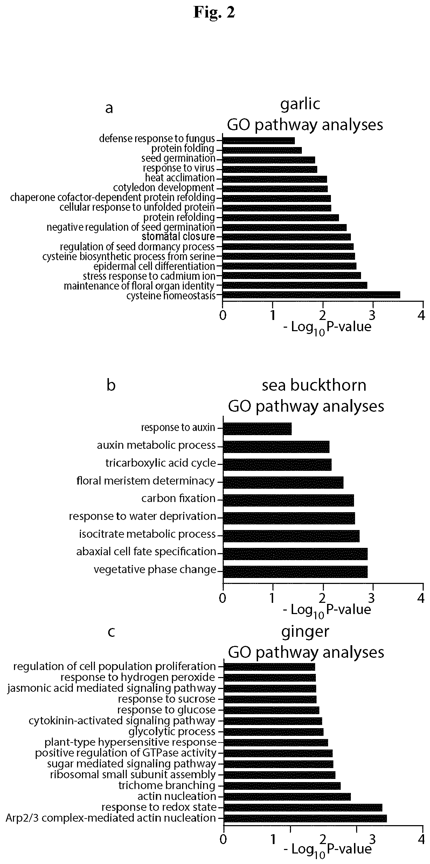

Having characterized the general physical and biochemical properties of ELNs, we followed up with more dedicated analyses of their molecular content. Mass spectrometry (MS) analyses followed by the gene ontology (GO) enrichment analyses revealed that the pathways likely to be affected by the ELNs are largely different and depend on the source of the particles. Fig. 2 shows significantly (p < 0.05) upregulated biological pathways for ELNs obtained from garlic (a), sea buckthorn (b) and ginger (c). The majority of the biological pathway linked to the garlic derived ELNs affect plant's response to various pathogens and help to cope with cellular stress (Fig 2a). In contrast, ELNs isolated from sea buckthorn (Fig. 2b) and ginger (Fig. 2c) are largely related to metabolism, plant development, and response to nutrients and water.

### Example 2: Field trials

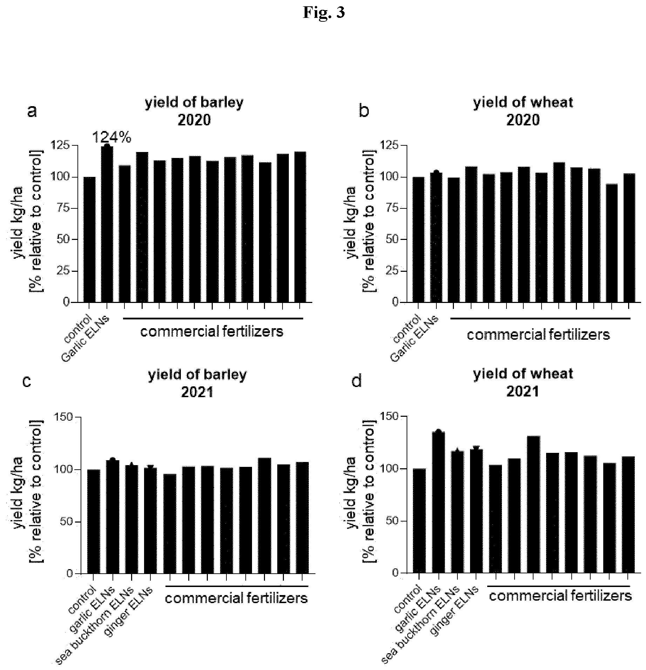

Field trials were carried out in the spring-autumn period 2020 and 2021 in the southern Estonia as described in the materials and methods section. Results in Fig. 3 demonstrate that the garlic derived ELNs substantially increased the yield of barley in both agricultural seasons, outperforming all commercially available fertilizers and sea buckthorn and ginger ELNs (only tested during the 2021 season). Effect on the yield of wheat is mixed - almost no effect was seen in 2020 whereas 35% increase was detected in the 2021 season. Similar trend applies for the commercial fertilizers as well, and likely can be explained by the fact that there was a prolonged period of draught in 2021. For instance, 97mm of rain was measured in July 2020 compared to just 17 mm in 2021 ear the area of the field experiments (historic temperature and precipitation data [36]). Growth conditions in 2021 were non-optimal for wheat and the effect of fertilizers or biostimulators was therefore more prominent.

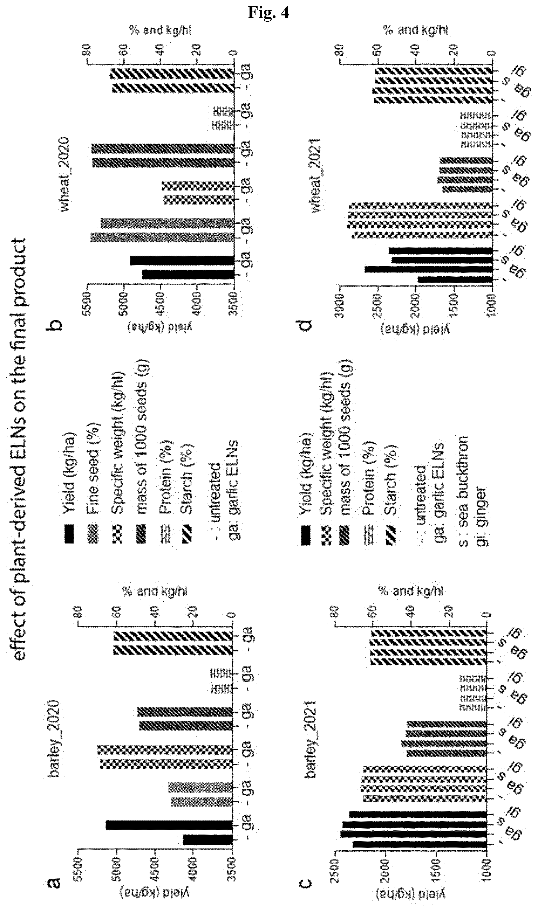

To illustrate the differences between 2020 and 2021 spring-autumn seasons, absolute yields of barley and wheat (tons/ha) are shown on Figs. 4a and 4b - the difference is almost 100%. Based on the mass of 1000 seeds, it seems that plants that were treated with garlic derived ELNs had slightly bigger seeds compared to the untreated samples and samples that were treated with sea buckthorn or ginger ELNs. This was observed in 2020 and 2021 seasons, and for barley and wheat both (Fig. 4). Importantly, the treatment with ELNs did not alter the protein and starch content of the yield indicating that the quality of the seeds remains unchanged.

### Example 3: Comparative example

The effectiveness of ELNs derived from other plants such as Arabidopsis can be assessed in an experiment whereby the effect on pre-treated seeds is assessed, for example according to the following criteria:
- Time to germination
- Efficiency of germination
- Root length
- Roots dry mass
- Resistance to certain fungi infections such as fusarium

### BIBLIOGRAPHY

1-Colombo, M.; Raposo, G.; Thery, C. Biogenesis, secretion, and intercellular interactions of exosomes and other extracellular vesicles. Annu Rev Cell Dev Biol 2014, 30, 255-289, doi:10.1146/annurev-cellbio-101512-122326.
2-Jeppesen, D.K.; Fenix, A.M.; Franklin, J.L.; Higginbotham, J.N.; Zhang, Q.; Zimmerman, L.J.; Liebler, D.C.; Ping, J.; Liu, Q.; Evans, R.; et al. Reassessment of Exosome Composition. Cell 2019, 177, 428-445 e418, doi:10.1016/j.cell.2019.02.029.
3-van Niel, G.; D'Angelo, G.; Raposo, G. Shedding light on the cell biology of extracellular vesicles. Nat Rev Mol Cell Biol 2018, 19, 213-228, doi:10.1038/nrm.2017.125.
4-Pan, B.T.; Johnstone, R.M. Fate of the transferrin receptor during maturation of sheep reticulocytes in vitro: selective externalization of the receptor. Cell 1983, 33, 967-978, doi:10.1016/0092-8674(83)90040-5.
5-Harding, C.; Stahl, P. Transferrin recycling in reticulocytes: pH and iron are important determinants of ligand binding and processing. Biochem Biophys Res Commun 1983, 113, 650-658, doi:10.1016/0006-291x(83)91776-x.
6-Halperin, W.; Jensen, W.A. Ultrastructural changes during growth and embryogenesis in carrot cell cultures. J Ultrastruct Res 1967, 18, 428-443, doi:10.1016/s0022-5320(67)80128-x.
7-Ding, Y.; Wang, J.; Wang, J.; Stierhof, Y.D.; Robinson, D.G.; Jiang, L. Unconventional protein secretion. Trends Plant Sci 2012, 17, 606-615, doi:10.1016/j.tplants.2012.06.004.
8-Regente, M.; Pinedo, M.; Elizalde, M.; de la Canal, L. Apoplastic exosome-like vesicles: a new way of protein secretion in plants? Plant Signal Behav 2012, 7, 544-546, doi:10.4161/psb.19675.
9-Bachman, P.M.; Huizinga, K.M.; Jensen, P.D.; Mueller, G.; Tan, J.; Uffman, J.P.; Levine, S.L. Ecological risk assessment for DvSnf7 RNA: A plant-incorporated protectant with targeted activity against western corn rootworm. Regul Toxicol Pharmacol 2016, 81, 77-88, doi:10.1016/j.yrtph.2016.08.001.
10-Jia, R.; Zhao, H.; Huang, J.; Kong, H.; Zhang, Y.; Guo, J.; Huang, Q.; Guo, Y.; Wei, Q.; Zuo, J.; et al. Use of RNAi technology to develop a PRSV-resistant transgenic papaya. Sci Rep 2017, 7, 12636, doi:10.1038/s41598-017-13049-0.
11-Tenllado, F.; Diaz-Ruiz, J.R. Double-stranded RNA-mediated interference with plant virus infection. J Virol 2001, 75, 12288-12297, doi:10.1128/JVI.75.24.12288-12297.2001.
12-Wang, M.; Weiberg, A.; Lin, F.M.; Thomma, B.P.; Huang, H.D.; Jin, H. Bidirectional cross-kingdom RNAi and fungal uptake of external RNAs confer plant protection. Nat Plants 2016, 2, 16151, doi:10.1038/nplants.2016.151.
13-McLoughlin, A.G.; Wytinck, N.; Walker, P.L.; Girard, I.J.; Rashid, K.Y.; de Kievit, T.; Fernando, W.G.D.; Whyard, S.; Belmonte, M.F. Identification and application of exogenous dsRNA confers plant protection against Sclerotinia sclerotiorum and Botrytis cinerea. Sci Rep 2018, 8, 7320, doi: 10.1038/s41598-018-25434-4.
14-Koch, A.; Biedenkopf, D.; Furch, A.; Weber, L.; Rossbach, O.; Abdellatef, E.; Linicus, L.; Johannsmeier, J.; Jelonek, L.; Goesmann, A.; et al. An RNAi-Based Control of Fusarium graminearum Infections Through Spraying of Long dsRNAs Involves a Plant Passage and Is Controlled by the Fungal Silencing Machinery. PLoS Pathog 2016, 12, e1005901, doi:10.1371/journal.ppat.1005901.
15-Heinemann, M.L.; Ilmer, M.; Silva, L.P.; Hawke, D.H.; Recio, A.; Vorontsova, M.A.; Alt, E.; Vykoukal, J. Benchtop isolation and characterization of functional exosomes by sequential filtration. J Chromatogr A 2014, 1371, 125-135, doi:10.1016/j.chroma.2014.10.026.
16-Li, P.; Kaslan, M.; Lee, S.H.; Yao, J.; Gao, Z. Progress in Exosome Isolation Techniques. Theranostics 2017, 7, 789-804, doi:10.7150/thno.18133.
17-Cai, Q.; Qiao, L.; Wang, M.; He, B.; Lin, F.M.; Palmquist, J.; Huang, S.D.; Jin, H. Plants send small RNAs in extracellular vesicles to fungal pathogen to silence virulence genes. Science 2018, 360, 1126-1129, doi:10.1126/science.aar4142.
18-Bozkurt, T.O.; Belhaj, K.; Dagdas, Y.F.; Chaparro-Garcia, A.; Wu, C.H.; Cano, L.M.; Kamoun, S. Rerouting of plant late endocytic trafficking toward a pathogen interface. Traffic 2015, 16, 204-226, doi:10.1111/tra.12245.
19-Nielsen, M.E.; Jurgens, G.; Thordal-Christensen, H. VPS9a Activates the Rab5 GTPase ARA7 to Confer Distinct Pre- and Postinvasive Plant Innate Immunity. Plant Cell 2017, 29, 1927-1937, doi:10.1105/tpc,16.00859.
20-Wang, F.; Shang, Y.; Fan, B.; Yu, J.Q.; Chen, Z. Arabidopsis LIP5, a positive regulator of multivesicular body biogenesis, is a critical target of pathogen-responsive MAPK cascade in plant basal defense. PLoS Pathog 2014, 10, e1004243, doi:10.1371/journal.ppat.1004243.
21-Roth, R.; Hillmer, S.; Funaya, C.; Chiapello, M.; Schumacher, K.; Lo Presti, L.; Kahmann, R.; Paszkowski, U. Arbuscular cell invasion coincides with extracellular vesicles and membrane tubules. Nat Plants 2019, 5, 204-211, doi:10.1038/s41477-019-0365-4.
22-Wang, J.; Ding, Y.; Wang, J.; Hillmer, S.; Miao, Y.; Lo, S.W.; Wang, X.; Robinson, D.G.; Jiang, L. EXPO, an exocyst-positive organelle distinct from multivesicular endosomes and autophagosomes, mediates cytosol to cell wall exocytosis in Arabidopsis and tobacco cells. Plant Cell 2010, 22, 4009-4030, doi:10.1105/tpc.110.080697.
23-Rutter, B.D.; Innes, R.W. Extracellular Vesicles Isolated from the Leaf Apoplast Carry Stress-Response Proteins. Plant Physiol 2017, 173, 728-741, doi:10.1104/pp.16.01253.
24-Cai, Q.; He, B.; Wang, S.; Fletcher, S.; Niu, D.; Mitter, N.; Birch, P.R.J.; Jin, H. Message in a Bubble: Shuttling Small RNAs and Proteins Between Cells and Interacting Organisms Using Extracellular Vesicles. Annu Rev Plant Biol 2021, 72, 497-524, doi:10.1146/annurev-arplant-081720-010616.
25-Barreiro, K.; Dwivedi, O.P.; Valkonen, S.; Groop, P.H.; Tuomi, T.; Holthofer, H.; Rannikko, A.; Yliperttula, M.; Siljander, P.; Laitinen, S.; et al. Urinary extracellular vesicles: Assessment of pre-analytical variables and development of a quality control with focus on transcriptomic biomarker research. J Extracell Vesicles 2021, 10, e12158, doi:10.1 002/jev2.12158.
26-Fortunato, D.; Mladenovic, D.; Criscuoli, M.; Loria, F.; Veiman, K.L.; Zocco, D.; Koort, K.; Zarovni, N. Opportunities and Pitfalls of Fluorescent Labeling Methodologies for Extracellular Vesicle Profiling on High-Resolution Single-Particle Platforms. Int J Mol Sci 2021, 22, doi:10.3390/ijms221910510.
27-Mi, H.; Muruganujan, A.; Huang, X.; Ebert, D.; Mills, C.; Guo, X.; Thomas, P.D. Protocol Update for large-scale genome and gene function analysis with the PANTHER classification system (v.14.0). Nat Protoc 2019, 14, 703-721, doi:10.1 038/s41596-019-0128-8.
28-Cox, J.; Mann, M. MaxQuant enables high peptide identification rates, individualized p.p.b.-range mass accuracies and proteome-wide protein quantification. Nat Biotechnol 2008, 26, 1367-1372, doi:10.1038/nbt,1511.
29-Thery, C.; Witwer, K.W.; Aikawa, E.; Alcaraz, M.J.; Anderson, J.D.; Andriantsitohaina, R.; Antoniou, A.; Arab, T.; Archer, F.; Atkin-Smith, G.K.; et al. Minimal information for studies of extracellular vesicles 2018 (MISEV2018): a position statement of the International Society for Extracellular Vesicles and update of the MISEV2014 guidelines. J Extracell Vesicles 2018, 7, 1535750, doi:10.1080/20013078.2018.1535750.
30-Regente, M.; Pinedo, M.; San Clemente, H.; Balliau, T.; Jamet, E.; de la Canal, L. Plant extracellular vesicles are incorporated by a fungal pathogen and inhibit its growth. J Exp Bot 2017, 68, 5485-5495, doi:10.1093/jxb/erx355.
31-Mammadova, R.; Fiume, I.; Bokka, R.; Kralj-Iglic, V.; Bozic, D.; Kisovec, M.; Podobnik, M.; Zavec, A.B.; Hocevar, M.; Gellen, G.; et al. Identification of Tomato Infecting Viruses That Co-Isolate with Nanovesicles Using a Combined Proteomics and Electron-Microscopic Approach. Nanomaterials (Basel) 2021, 11, doi:10.3390/nano11081922.
32-Nemeth, K.; Varga, Z.; Lenzinger, D.; Visnovitz, T.; Koncz, A.; Hegedus, N.; Kittel, A.; Mathe, D.; Szigeti, K.; Lorincz, P.; et al. Extracellular vesicle release and uptake by the liver under normo- and hyperlipidemia. Cell Mol Life Sci 2021, doi: 10.1007/s00018-021-03969-6.
33-Erdbrugger, U.; Lannigan, J. Analytical challenges of extracellular vesicle detection: A comparison of different techniques. Cytometry A 2016, 89, 123-134, doi:10.1002/cyto.a.22795.
34-Varga, Z.; Feher, B.; Kitka, D.; Wacha, A.; Bota, A.; Berenyi, S.; Pipich, V.; Fraikin, J.L. Size Measurement of Extracellular Vesicles and Synthetic Liposomes: The Impact of the Hydration Shell and the Protein Corona. Colloids Surf B Biointerfaces 2020, 192, 111053, doi:10.1016/j.colsurfb.2020.111053.
35-Kowal, J.; Arras, G.; Colombo, M.; Jouve, M.; Morath, J.P.; Primdal-Bengtson, B.; Dingli, F.; Loew, D.; Tkach, M.; Thery, C. Proteomic comparison defines novel markers to characterize heterogeneous populations of extracellular vesicle subtypes. Proc Natl Acad Sci U S A 2016, 113, E968-977, doi:10.1073/pnas.1521230113.
36-Historic Estonian Weather Data http://www.ilmateenistus.ee/kliima/climate-maps/precipitation/?lang=en (accessed 25. October 2021).

## Claims

1. A process to obtain a composition enriched in extracellular-like nanoparticles (ELNs) from a plant or part thereof, such method comprising the steps of
a) obtaining a homogenate from such plant or parts thereof;
b) eliminating debris from the homogenate obtained in step a) though filtration and/or centrifugation;
c) subjecting the filtrate or supernatant obtained in step b) to two consecutive steps of tangential flow filtration (TFF).

2. The process according to claim 1, wherein the first TFF step is performed using a TFF filter having an average pore size range selected from the list of 150 to 250 nm, 150 to 300, 150 to 350 nm ,150 to 400 nm, 150 to 450 nm and 150 to 500 nm.

3. The process according to claims 1-2 wherein the first TFF step is performed using a TFF filter having an average pore size of 200 nm.

4. The process of claims 1-3, wherein the second TFF step is performed using a TFF filter having an average pore size range selected from the list of 30 to 70 nm, 30 to 100 nm, 30 to 150 nm.

5. The process according to claims 1-4, wherein the second TFF step is performed using a TFF filter having an average pore size an average pore size of 50 nm.

6. The process according to claims 1-5, wherein the ELNs have a size ranging from 300 to 500 nm.

7. The process according to claims 1-6, wherein the plant or part thereof is selected from the list of garlic, garlic bulb, ginger, ginger root, sea buckthorn and sea buckthorn fruit.

8. A method to improve the crop yield of a plant, such method comprising treating its seeds with a composition comprising ELNs obtained from garlic or parts thereof prior to planting and/or treating the plant itself with such composition during growth.

9. The method according to claim 8, wherein the ELNs are obtained through the process according to claims 1-7.

10. The method according to claims 8-9, wherein the ELNs are obtained from garlic bulbs.

11. The method according to claims 8-10, wherein the plant is a cereal, in particular a cereal selected form the list of wheat and barley.

12. The use of ELNs obtained from garlic or parts thereof to improve plant crop yields.

13. The use according to claim 12, wherein the ELNs are obtained through the process according to claims 1-7.

14. The use according to claims 12-13, wherein the ELNs are obtained from garlic bulbs.

15. The use according to claims 11-13 wherein the plant is a cereal, particularly a cereal selected form the list of wheat and barley.
